# EUROPÄISCHE PATENTSCHRIFT

(11) **EP 0 708 185 B1**
(45) Veröffentlichungstag und Bekanntmachung des Hinweises auf die Patenterteilung: **01.04.1998**
(21) Anmeldenummer: 95115988.8
(22) Anmeldetag: 11.10.1995
(51) Int. Cl.: C23C 16/04, C23C 16/50, H01J 37/32, B05D 7/24

(54) **Vorrichtung zum Behandeln von Oberflächen, insbesondere von Innenflächen von Kraftstofftanks**
Apparatus for treating the surface of an object, especially the internal surface of fuel tanks
Appareil pour traiter la surface d'un objet, notamment la surface interne des réservoirs de carburant

(30) Priorität: 17.10.1994 DE 4437050
(43) Veröffentlichungstag der Anmeldung: 24.04.1996
(73) Patentinhaber: Balzers und Leybold Deutschland Holding Aktiengesellschaft, 63450 Hanau (DE)
(72) Erfinder: Grünwald, Heinrich, Dr., D-35510 Butzbach (DE); Kloberdanz, Hermann, Dr., D-63589 Linsengericht (DE); Lacher, Roland, D-63571 Gelnhausen (DE); Böll, Siang-Hong, D-63755 Alzenau (DE)

(56) Entgegenhaltungen:
- WO-A-93/24243
- DE-A- 3 632 748
- DE-A- 3 908 418
- DE-A- 4 316 349
- DE-A- 4 318 084

## Beschreibung

Die Erfindung betrifft eine Vorrichtung zur Behandlung von Oberflächen von Hohlkörpern, insbesondere von Innenflächen von Kraftstofftanks, mit einer über Vakuumpumpen evakuierbaren Behandlungskammer, einer den Hohlkörper in der Behandlungskammer tragenden Halterung, mit einer Leitung für den Einlaß eines Prozeßgases in die Behandlungskammer und mit einem mit einen Generator verbundenen Mikrowellenleiter zum Zünden eines Plasmas im Bereich des Hohlkörpers.

Bei Kunststoffbehältern besteht allgemein das Problem, daß darin befindliche Inhaltsstoffe, insbesondere solche, die aus kleineren Molekülen bestehen durch die Behälterwand hindurch wandern können. Dies ist insbesondere dann unerwünscht, wenn die Inhaltsstoffe schädlich oder teuer sind oder aber der im Behälter verbleibende Inhalt durch den Verlust einzelner Komponenten in seinen Eigenschaften verändert wird. Letzteres ist z.B. bei Geruchsstoffen der Fall.

Ein besonders zukunftsträchtiges Verfahren zur Erzeugung geeigneter Sperrschichten ist die Plasmapolymerisation, da sich hiermit permeationsdichte, dabei sehr dünne Kunststoffschichten auch im Innern des Behälters abscheiden lassen. Damit ist neben der erforderlichen Sperrwirkung auch gute Rezyklierfähigkeit des Behältermaterials gegeben. Ein besonderer Vorteil gegenüber dem derzeit angewandten Fluorierungsverfahren ist die Tatsache, daß keine gefährlichen Arbeitsstoffe (wie Fluor) eingesetzt werden müssen.

Es ist ein Verfahren zur Plasmainnenbeschichtung von Hohlkörpern bekannt (DE 36 32 748) bei dem zur Erzeugung des Plasmas Mikrowellen von außen in den Tank eingespeist werden, so daß ein homogenes Mikrowellenfeld im Innern des Plasmareaktors erzeugt wird. Es ist jedoch in der Fachwelt bekannt, daß gerade das Erzeugen eines homogenen Mikrowellenfeldes in Volumina von technischer Bedeutung, z.B. von Kraftstofftanks, ein besonderes Problem darstellt.

Weiterhin ist eine Vorrichtung zum Innenbeschichten von Kunststoffbehältern bekannt (DE 39 08 418), mit dem ein Plasma mit einer Hochfrequenzspannung im MHz-Bereich oder 2,45 GHz, also Mikrowelle, angeregt wird. Die Hochfrequenz wird hier über eine Hohlsonde in den Kunststoffbehälter eingespeist. Auch die angegebene Hohlsonde läßt kein gleichförmiges Hochfrequenz- oder Mikrowellenfeld, insbesondere in komplex gestalteten Kraftstoffbehältern, erwarten.

Bekannt ist schließlich eine Methode zur Innenbeschichtung von Plastiktanks (JP 3 107 458), bei der mit Hilfe einer an zwei in den Tank eingeführten Elektroden angelegten Hochfrequenzspannung ein Plasma innerhalb des Tanks erzeugt und zu einer Vorbehandlung und einer nachfolgenden Polymerisation benutzt wird.

Den genannten Vorrichtungen gemeinsam ist der Nachteil, daß sie keine Möglichkeiten bieten, ein Plasma mit homogen beschichtender Wirkung zu erzielen und auch keine schnelle Kontrolle der Schichtqualität, insbesondere ihrer Permeationssperrwirkung gestatten. Dieser Nachteil wiegt umso schwerer, als die zugelassene Permeation von Inhaltsstoffen aus dem Behälter im Falle von Kraftstoffbehältern immer niedriger wird, andererseits der Zeitaufwand für deren Bestimmung in eigens dazu gebauten Testkammern im Bereich von Monaten liegt.

Der Erfindung liegt die Aufgabe zugrunde, eine Vorrichtung zu schaffen, die eine möglichst homogene Verteilung der Anregungsenergie für das Plasma erlaubt, wodurch eine wesentliche Grundbedingung für die Abscheidung einer Schicht mit einheitlichen Eigenschaften, z.B. Dicke, verwirklicht wird, die Vorrichtung soll es außerdem ermöglichen, die Dichtigkeit jedes beschichteten Behälters mit geringem Zeit- und Kostenaufwand zu prüfen. Zusätzlich soll die Vorrichtung im Sinne der "just in time"-Produktion mit möglichst geringem Rüstaufwand für die Beschichtung unterschiedlicher Behälterformen einsetzbar sein.

Diese Aufgabe wird erfindungsgemäß gelöst durch eine, der Konfiguration des mit einer Einfüllöffnung versehenen Hohlkörpers angepaßten, diesen einhüllenden Blechschale, wobei in die Blechschale nutenförmige Vertiefungen eingearbeitet oder eingeprägt sind, die zusammen mit der diese abdeckenden Hohlkörperwand einen Hohlleiter bilden, der mit dem Generator über den Mikrowellenleiter verbindbar ist, wobei die Leitung für das Prozeßgas in das Innere des Hohlkörpers einführbar ist und wobei ein Verschlußteil oder Stopfen vorgesehen ist, über den die Einfüllöffnung des Hohlkörpers druckdicht verschließbar ist.

Weitere Einzelheiten und Merkmale sind in den Unteransprüchen näher beschrieben und gekennzeichnet.

Die Erfindung läßt die verschiedensten Ausführungsmöglichkeiten zu, eine davon ist in den anhängenden Zeichnungen schematisch näher dargestellt, die die Vorrichtung im Längsschnitt sowohl im geschlossenen, als auch geöffneten Zustand zeigen.

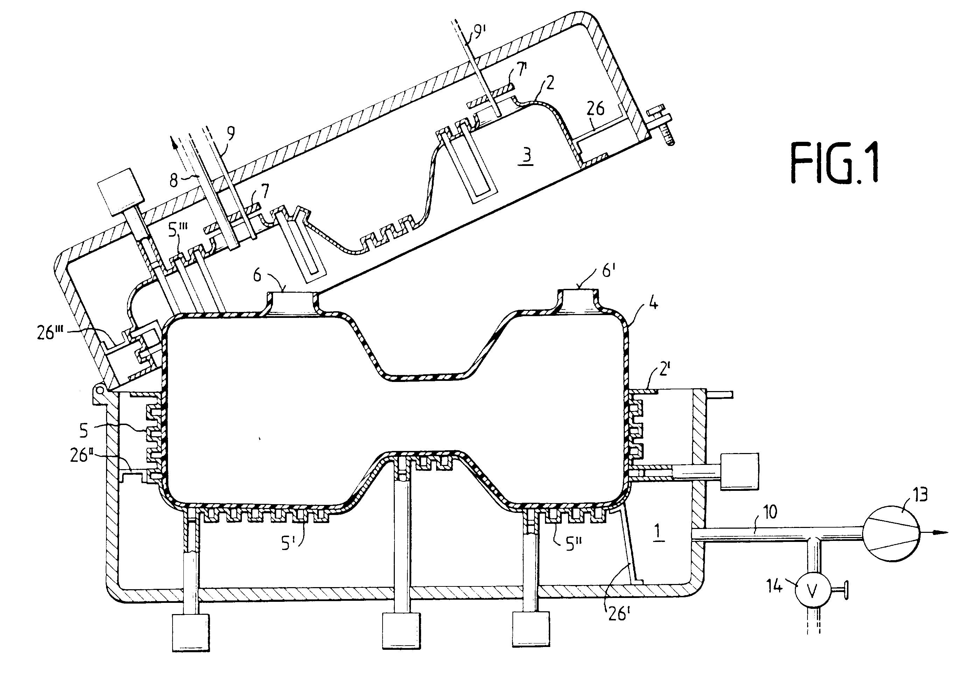

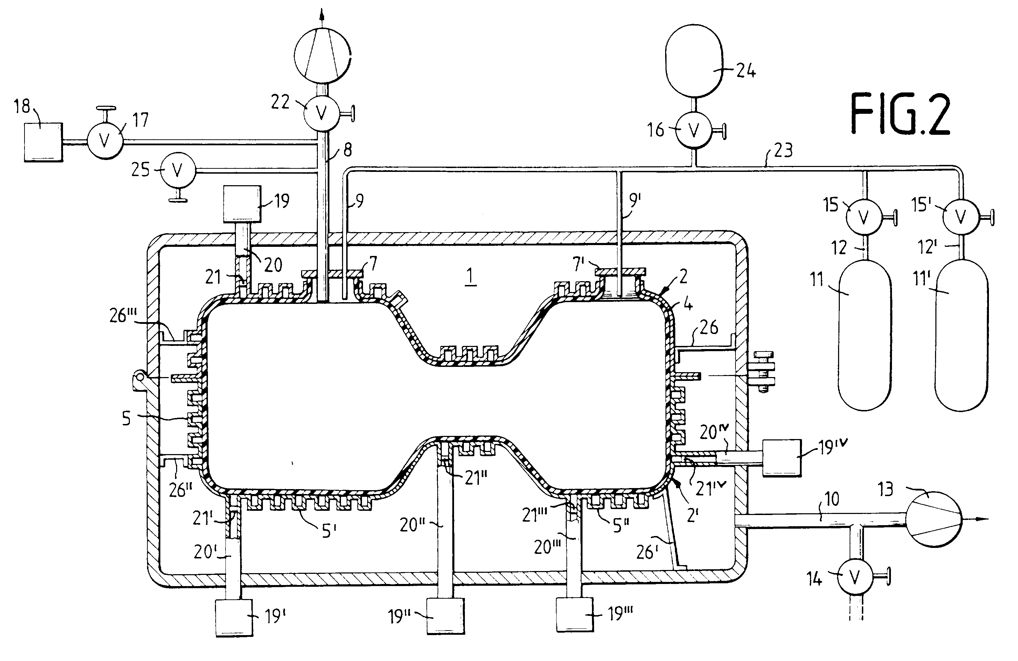

Gemäß Figur 1 ist eine aufklappbare Vakuumkammer 1 mit mindestens *zwei* schalenförmigen Blechen 2,2' ausgekleidet, derart, daß ein von beiden Blechen umschlossener Hohlraum 3 im wesentlichen dieselbe Konfiguration aufweist, wie der zu beschichtende Kraftstofftank 4. In die behälterseitige Oberfläche der Bleche 2, 2' sind mäanderförmig verlaufende Nuten 5, 5', 5", 5"' mit Rechteckprofil eingebracht, durch die zur Plasmaerzeugung Mikrowellen zugeführt und über die Innenfläche des Hohlraums verteilt werden können. Die Bleche 2, 2' sind so angeordnet und befestigt, daß der von ihnen umschlossene Hohlraum 3 beim Öffnen der Vakuumkammer 1 ebenfalls geöffnet und somit für das Einlegen des Behälters 4 zugänglich wird. In der Vakuumkammer 1 bzw. an den Blechen 2, 2' befinden sich Stopfen 7,7' zum schnellen Verschließen der verschiedenen Öffnungen 6, 6' des Behälters 4, die bevorzugt so gestaltet sind, daß sich die Öffnungen 6, 6' beim Zusammenklappen der Vakuumkammer 1 selbsttätig, z.B. durch Druck verschließen und so den Innenraum des Behälters 4 vom Innenraum der Vakuumkammer 1 abtrennen. Je nach Anzahl und Anordnung der Öffnungen 6, 6' ist mindestens einer der Verschlüsse oder Stopfen 7, 7' so ausgebildet, daß er gleichzeitig die Zufuhr und Absaugung von Reaktionsgas erlaubt, wobei die entsprechende Vakuumleitung 8 und Gaszuführleitung 9 bzw. 9' keine Verbindung zum Innern der Vakuumkammer 1 hat. Die Vakuumkammer 1 ist ihrerseits über eine gesonderte Vakuumleitung 10 mit einem Vakuumpumpstand 13 sowie einem Belüftungsventil 14 verbunden. Das Reaktionsgas oder Reaktionsgasgemisch wird einem oder mehreren Gas- oder Flüssigkeitsbehältern 11 bzw. 11' entnommen und über eine Leitung 12, 12' dem Behälterninneren 3 zugeführt. Zur Dosierung des Reaktionsgasstroms ist innerhalb der Leitung mindestens ein Regelventil 15, 15' vorgesehen. Die Gaszuführleitung 9, 9' ist über ein Ventil 16 mit einer Zuleitung für Helium 24 und die Vakuumleitung 8 über ein Ventil 17 mit einem Heliumdetektor 18 verbunden. Die Mikrowellenversorgung erfolgt z.B. durch Magnetrons 19, 19', ... mit einer Arbeitsfrequenz von 2,45 GHz, die über je einen Hohlleiter 20, 20', ... mit einer spulen- bzw. mäanderförmigen Ausnehmung bzw. ein Vertiefungsmuster 5, 5', ... verbunden sind. Hierbei wird das Innere der Hohlleiter 20, 20', ... durch je eine Quarzscheibe 21, 21', ..., die in die Ausnehmung 5, 5', ... eingelassen sind, vom Innern der Vakuumkammer gasdicht abgetrennt, so daß auch bei angelegtem Vakuum in der Vakuumkammer 1 im Innern der Hohlleiter 20, 20', ... Atmosphärendruck herrscht.

Die Vorrichtung wird folgendermaßen betrieben:
Zunächst wird ein der zu beschichtenden Behälterart angepaßter Satz Blechschalen 2 in den geöffneten Vakuumbehälter 1 eingelegt und die Magnetrons 19, 19', ... über die Hohlleiter 20, 20' ... mit der Ausnehmung 5, 5', ... verbunden. Anschließend wird der erste zu beschichtende Behälter 4 eingelegt und seine Öffnungen 6, 6' zugleich mit dem Schließen der Vakuumkammer 1 durch die Stopfen 7, 7' verschlossen und somit vom Innenraum der Vakuumkammer 1 gasdicht abgetrennt. Anschließend werden das Innere des Behälters 4 und das Innere der Vakuumkammer 1 gleichzeitig über die Vakuumleitungen 8 und 10 evakuiert. Nach Erreichen eines vorbestimmten Außendrucks innerhalb des Hohlraums 3, jedoch außerhalb des Behälters 4, wird die Pumpleitung 10 durch ein Ventil verschlossen und somit dieser Druck zunächst beibehalten. Die Höhe des Außendrucks ist so zu wählen, daß der Behälter durch die Druckdifferenz zwischen Behälterinnendruck und Außendruck nicht wesentlich deformiert wird. Andererseits muß er genügend hoch sein, um zu verhindern, daß sich beim späteren Zünden des Plasmas innerhalb des Behälters 4 auch innerhalb der Kammer 1 und insbesondere innerhalb der spulenförmigen Ausnehmungen 5, 5', ... ebenfalls ein Plasma ausbildet. Für den Fall, daß sich ein unerwünschtes Plasma außerhalb des Behälters 4 wegen zu niedrigen Differenzdrucks nicht zuverlässig unterdrücken läßt, muß der Hohlraum 3 außerhalb des Behälters mit einem Material, das Mikrowellen nicht absorbiert, zumindest teilweise ausgefüllt werden. Hierzu wird bevorzugt ein dielektrisches Material mit großer Oberfläche, z.B. Glasfasern, verwendet. Das Innere des Behälters wird weiter bis auf einen Restdruck von beispielsweise 0,001 mbar evakuiert. Daraufhin werden das oder die zur Beschichtung eingesetzten Reaktivgase aus den Behältern 11, 11' über die Gaszuführleitung 12, 12' und den oder die Ventile 15, 15' in den Behälter 4 eingeleitet. Nach Stabilisierung eines vorbestimmten Prozeßdrucks zwischen ca. 0,005 und 0,8 mbar wird durch Einschalten der Magnetrons 19, 19', ... ein Plasma gezündet und über eine vorbestimmte Prozeßzeit aufrecht erhalten. Hierbei werden die vom Magnetron abgestrahlten Mikrowellen über die mäanderförmigen Ausnehmungen 5, 5', ... in den zu beschichtenden Behälter 4 eingestrahlt, so daß innerhalb des Behälters 4 ein Plasma mit entlang der Innenwand weitgehend homogener Energiedichte erzeugt wird.

Zur weiteren Verbesserung der Beschichtungshomogenität empfiehlt es sich, die Mikrowelleneinstrahlung z.B. über die Stromversorgung der Magnetrons 19, 19', ... mit einer Frequenz zwischen 20 und 200 Hz zu pulsen. Alternativ oder zusätzlich kann der Zufluß von Reaktivgas(gemisch) in den Tank oder von Abgasen aus dem Behälter heraus durch eine in der Gaszuführleitung 23 oder der Vakuumleitung 8... installierte geeignete (nicht gezeichnete) Vorrichtung, z.B. eine steuerbare Drosselklappe oder rotierende Blende, gepulst werden. Dies ist gegenüber dem Pulsbetrieb der Magnetrons 19, 19', ... insofern vorteilhaft, als das Plasma kontinuierlich aufrechterhalten wird und ein Absinken der Beschichtungsrate und der Permeationsdichtigkeit der Schichten in den Pulspausen vermeiden wird. Es ist in diesem Fall jedoch zu beachten, daß die hierbei auftretenden Druckschwankungen noch innerhalb des Druckbereichs liegen müssen, innerhalb dessen die Plasmaanregung stabil und wirtschaftlich erfolgt. Durch das Pulsen werden Konzentrationsunterschiede an für die Beschichtung notwendigen reaktiven Teilchen innerhalb des Plasmas abgebaut.

Nach Ablauf der Prozeßzeit werden die Magnetrons 19, 19', ... abgeschaltet, der Zufluß von Reaktionsgas(en) unterbrochen und erneut auf einen Restdruck von ca. 0,001 mbar evakuiert. Sofort anschließend wird die Vakuumleitung 8 mit Hilfe eines Ventils 22 geschlossen und aus dem Tank 24 und über die Gaszuführleitung 23 Helium in den Behälter 4 eingelassen, bis ein vorbestimmter Druck von z.B. 100 mbar erreicht ist. Gleichzeitig wird die Vakuumkammer 1 wieder über die nun wieder geöffnete Vakuumleitung 8 evakuiert. Nach einer vorgegebenen Verweilzeit von 10 Minuten wird der Partialdruck des durch die Behälterwand gedrungenen Heliums mit dem Heliumsensor 18 gemessen, die Heliumleckrate bestimmt und somit die Permeationssperrwirkung der Beschichtung für die Qualitätskontrolle ausgewiesen. Anschließend werden die Gaszuführleitung 23 sowie die Vakuumleitungen 8 und 10 mit Ventilen verschlossen und die Vakuumkammer 1 und der Behälter 4 über Belüftungsventile 14, 25 belüftet. Nach Öffnen der Vakuumkammer 1 und dem Verschwenken des Tankdeckes der Blechschale 2 in die in Figur 1 dargestellte Position wird der beschichtete Behälter 4 entnommen.

Bei einer bevorzugten Ausführungsform ist die Wand der Vakuumkammer 1 mit einer zusätzlichen Gasleitung über ein Ventil verbunden, durch die, zugleich mit dem Reaktionsgas ein plasmahemmendes Gas, d.h. ein solches, in dem sich unter diesen Bedingungen ein Plasma nur schwer zünden läßt, einlassbar ist. Als plasmahemmende Gase kommen solche in Betracht, die elektronegative, vorzugsweise größere Moleküle aufweisen, wie z.B. Schwefelhexafluorid oder solche mit großer freier Weglänge im Vakuum wie beispielsweise Wasserstoff Der Druck des plasmahemmenden Gases wird so eingestellt, daß ein Plasma zwischen Behälteraußenseite und den schalenförmigen Blechen 2, 2' nicht mehr gezündet werden kann, wobei dieser Druck von der Art des plasmahemmenden Gases und dem größten Abstand zwischen Behälteraußenwand und den Blechen 2, 2' abhängt, in der Regel im Bereich von 5 bis 10 mbar liegt.

### Auflistung der Einzelteile

- 1: Vakuumkammer
- 2, 2': schalenförmige Bleche
- 3: Hohlraum
- 4: Behälter; Kraftstofftank
- 5, 5', ...: Nutartige Vertiefung Einprägung
- 6, 6', ...: Öffnung
- 7, 7', ...: Stopfen, Deckel
- 8: Vakuumanschluß
- 9, 9': Gasleitung
- 10: Vakuumanschluß
- 11, 11': Gasbehälter
- 12, 12': Gasleitung
- 13: Pumpstand
- 14: Belüftungsventil
- 15, 15': Regelventil
- 16: Ventil
- 17: Ventil
- 18: Heliumdetektor
- 19, 19', ...: Magnetron
- 20, 20', ...: Hohlleiter
- 21, 21', ...: Querscheibe
- 22: Ventil
- 23: Gaszuführleitung
- 24: Heliumtank
- 25: Belüftungsventil
- 26, 26': Halterung

## Patentansprüche

1. Vorrichtung zur Behandlung von Oberflächen von Hohlkörpern (4), insbesondere von Innenflächen von Kraftstofftanks, mit einer über Vakuumpumpen (13,13') evakierbaren Behandlungskammer (1), einer den Hohlkörper (4) in der Behandlungskammer (1) tragenden Halterung (26,26'), mit einer Leitung (9,9') für den Einlaß eines Prozeßgases in die Behandlungskammer (1) und mit einem mit einen Generator (19,19'...) verbundenen Mikrowellenleiter (20,20'...) zum Zünden eines Plasmas im Bereich des Hohlkörpers (4), gekennzeichnet durch eine, der Konfiguration des mit einer Einfüllöffnung (6,6') versehenen Hohlkörpers (4) angepaßten, den Hohlkörper (4) einhüllenden metallenen Schale (2,2'), wobei in die Schale (2,2') nutenförmige Vertiefungen (5,5'...) eingearbeitet oder eingeprägt sind, die zusammen mit der diese Vertiefungen (5,5',...) abdeckenden Hohlkörperwand einen Hohlleiter bilden, der mit dem Generator (19,19',...) über den Mikrowellenleiter (20,20'...) verbindbar ist, wobei die Leitung (9,9') für das Prozeßgas in das Innere des Hohlkörpers (4) einführbar ist und wobei ein Verschlußteil (7,7') oder Stopfen vorgesehen ist, über den die Einfüllöffnung (7,7') des Hohlkörpers (4) druckdicht verschließbar ist.

2. Vorrichtung nach Anspruch 1, dadurch gekennzeichnet, daß die in die Metallschale (2,2') eingeprägten oder eingeschnittenen Vertiefungen (5,5'...) ein Muster bildend sich beispielsweise mäanderartig über die wesentlichen Partien des Hohlkörpers (4) erstrecken.

3. Vorrichtung nach den Ansprüchen 1 und 2, dadurch gekennzeichnet, daß mehrere über die Außenfläche des Hohlkörpers (4) verteilt angeordnete, Muster bildende nutenförmige Vertiefungen (5,5',...) vorgesehen sind, wobei jedes dieser Vertiefungsmuster mit je einem Mikrowellenleiter (20,20'...) korrespondiert, der seinerseits mit einem Generator (19,19',...) verbunden ist.

4. Vorrichtung nach einem oder mehreren der vorhergehenden Ansprüche, dadurch gekennzeichnet, daß jedes Vertiefungsmuster (5,5',...) mit einem Hohlleiter korrespondiert, der nach außen zu druckdicht durch die Wand der Vakuumkammer (1) hindurchgeführt ist, wobei jeweils im Bereich der Verbindung vom Hohlleiter zum Vertiefungsmuster (5,5',...) ein Quarzglasfenster (21,21',...) vorgesehen ist, das den Übertritt der Mikrowellen vom Hohlleiter (20,20',...) in das jeweilige Vertiefungsmuster (5,5',...) gestattet und gleichzeitig eine Abtrennung des im Vertiefungsmuster (5,5',...) herrschenden Drucks zum die Vorrichtung umgebenden Druck bewirkt.

5. Vorrichtung nach einem oder mehreren der vorhergehenden Ansprüche, dadurch gekennzeichnet, daß zwei halbschalenförmige Metallbleche (2,2') vorgesehen sind, die zusammen den Hohlkörper (4) vollständig einhüllen, wobei zumindest die eine Blech-Halbschale (2) Öffnungen aufweist, die derart angeordnet sind, daß sie mit den Einfällstutzen oder Auslaufstutzen (6,6') des Hohlkörpers (4) korrespondieren,. wenn diese Halbschale (2) auf dem Hohlkörper (4) aufliegt, wobei die Öffnungen in der Halbschale (2) mit Deckeln oder Stopfen (7,7') verschließbar sind, durch die die Gaseinlaßleitung (9,9') und/oder die Absaugleitung (8) hindurchgeführt sind.

6. Vorrichtung nach einem oder mehreren der vorhergehenden Ansprüche, dadurch gekennzeichnet, daß die Vakuumkammer (1) zweiteilig ausgebildet ist und die erste Halbschale (2') im einen Kammerteil und die zweite Halbschale (2) im anderen Kammerteil gehalten ist derart, daß bei geschlossener Vakuumkammer (1) beide Halbschalen (2,2') einen geschlossenen Mantel bildend aufeinanderliegen.

7. Vorrichtung nach einem oder mehreren der vorhergehenden Ansprüche, dadurch gekennzeichnet, daß einerseits das Innere des Hohlkörpers (4) an eine erste Vakuumpumpenleitung (8) und der die Halbschalen (2,2') umgebende Innenraum der Vakuumkammer (1) an eine zweite Vakuumpumpenleitung (10) anschließbar sind und beide Räume auf verschiedene Drücke einstellbar sind.

8. Vorrichtung nach einem oder mehreren der vorhergehenden Ansprüche, dadurch gekennzeichnet, daß die in die eine Halbschale (2') eingearbeiteten nutenförmigen Vertiefungen (5,5',...) ein Muster bilden, das mit den ein zweites Muster bildenden Vertiefungen der anderen Halbschale (2) korrespondiert, wenn beide Halbschalen (2,2') zu einem geschlossenen Mantel zusammengefügt sind.

9. Vorrichtung nach einem oder mehreren der vorhergehenden Ansprüche, dadurch gekennzeichnet, daß die Gaseinlaßleitung (9,9') mit einem Prüfgasbehälter (24) und mit der Absaugleitung (8) ein Heliumdetektor (18) verbindbar ist.

## Claims

1. Apparatus for treating surfaces of hollow bodies (4), in particular internal surfaces of fuel tanks, with a treatment chamber (1) evacuatable via vacuum pumps (13, 13'), a holding device (26, 26') supporting the hollow body (4) in the treatment chamber (1) with a line (9, 9') for the admission of a process gas into the treatment chamber (1) and with a microwave guide (20, 20'...) connected to a generator (19, 19'...) for igniting a plasma in the area of the hollow body (4), characterized by a metal shell (2, 2') matched to the configuration of the hollow body (4) provided with a feed opening (6, 6') and enveloping the hollow body (4), groove-shaped recesses (5, 5'...) being incorporated or impressed into the shell (2, 2'), which recesses together with the hollow body wall covering these recesses (5, 5'...) form a waveguide, which is connectable to the generator (19, 19'...) via the microwave guide (20, 20'...), the line (9, 9') for the process gas being insertable into the interior of the hollow body (4) and a sealing part (7, 7') or stopper being provided, by means of which the feed opening (6, 6') of the hollow body (4) can be sealed in a pressure-tight manner.

2. Apparatus according to claim 1, characterized in that the recesses (5, 5'...) impressed or cut into the metal shell (2, 2') extend forming a pattern for example meander-like over the basic sections of the hollow body (4).

3. Apparatus according to claims 1 and 2, characterized in that several groove-shaped recesses (5, 5'...) disposed distributedly over the external surface of the hollow body (4) and forming patterns are provided, each of these recess patterns corresponding to one microwave guide (20, 20'...) respectively, which is connected for its part to a generator (19, 19'...).

4. Apparatus according to one or more of the preceding claims, characterized in that each recess pattern (5, 5'...) corresponds to a waveguide, which is led outwards pressure-tight through the wall of the vacuum chamber (1), a quartz glass window (21, 21'...) being provided in each case in the area of the connection from the waveguide to the recess pattern (5, 5'...), which window permits the transfer of microwaves from the waveguide (20, 20'...) into the respective recess pattern (5, 5'...) and at the same time effects a separation of the pressure prevailing in the recess pattern (5, 5'...) from the pressure surrounding the apparatus.

5. Apparatus according to one or more of the preceding claims, characterized in that two metal sheets (2, 2') in the form of half-shells are provided, which together completely envelop the hollow body (4), at least one sheet metal half-shell (2) having openings, which are disposed such that they correspond to the feed connection or outlet connections (6, 6') of the hollow body (4) when this half-shell (2) is lying on the hollow body (4), the openings in the half-shell (2) being closable by lids or stoppers (7, 7'), through which the gas inlet line (9, 9') and/or the suction line (8) are led.

6. Apparatus according to one or more of the preceding claims, characterized in that the vacuum chamber (1) is formed in two parts and the first half-shell (2') is held in one chamber part and the second half-shell (2) in the other chamber part such that when the vacuum chamber (1) is closed both half-shells (2, 2') lie on one another forming a closed casing.

7. Apparatus according to one or more of the preceding claims, characterized in that on the one hand the interior of the hollow body (4) is connectable to a first vacuum pump line (8) and the interior of the vacuum chamber (1) surrounding the half-shells (2, 2') is connectable to a second vacuum pump line (10) and both spaces are adjustable to different pressures.

8. Apparatus according to one or more of the preceding claims, characterized in that the groove-shaped recesses (5, 5'...) incorporated into one half-shell (2') form a pattern, which corresponds to the recesses of the other half-shell (2) forming a second pattern when both half-shells (2, 2') are joined to form a closed casing.

9. Apparatus according to one or more of the preceding claims, characterized in that the gas inlet line (9, 9') is connectable to a test gas vessel (24) and a helium detector (18) is connectable to the suction line (8).

## Revendications

1. Dispositif pour traiter les surfaces de corps creux (4), en particulier les surfaces intérieures de réservoirs de carburant, comportant une chambre de traitement (1) susceptible d'être évacuée via des pompes à vide (13, 13'), une monture (26, 26') portant le corps creux (4) dans la chambre de traitement (1), une conduite (9, 9') pour l'entrée d'un gaz réactif dans la chambre de traitement (1), et comportant un conducteur à micro-ondes (20, 20', ...) relié à un générateur (19, 19', ...) pour allumer un plasma dans la région du corps creux (4), caractérisé par une coque métallique (2, 2') qui est adaptée à la configuration du corps creux (4) pourvu d'une ouverture de remplissage (6, 6') et qui enveloppe le corps creux (4), la coque (2, 2') présentant des renfoncements en forme de gorge (5, 5', ...) usinés ou emboutis qui forment conjointement avec la paroi de corps creux qui recouvre ces renfoncements (5, 5', ...) un conducteur creux qui peut être relié au générateur (19, 19',...) via le conducteur à micro-ondes (20, 20', ...), la conduite (9, 9') pour le gaz réactif pouvant être introduite dans l'intérieur du corps creux (4), et un élément de fermeture (7, 7') ou un bouchon étant prévu au moyen duquel l'ouverture de remplissage (6, 6') du corps creux (4) peut être refermée de façon étanche à la pression.

2. Dispositif selon la revendication 1, caractérisé en ce que les renfoncements (5, 5', ...) emboutis ou découpés dans la coque métallique (2, 2') s'étendent par exemple en forme de méandres sur les parties essentielles du corps creux (4) en formant un motif.

3. Dispositif selon les revendications 1 et 2, caractérisé en ce qu'il est prévu plusieurs renfoncements en forme de gorge (5, 5', ...) qui sont répartis sur la surface extérieure du corps creux (4) et qui forment un motif, chacun de ces motifs de renfoncement correspondant à un conducteur à micro-ondes respectif (20, 20', ...) qui est relié à son tour à un générateur (19, 19', ...).

4. Dispositif selon l'une ou plusieurs des revendications précédentes, caractérisé en ce que chaque motif de renfoncement (5, 5', ...) correspond à un conducteur creux qui est passé de façon étanche à la pression vers l'extérieur à travers la paroi de la chambre sous vide (1), une fenêtre en verre de quartz (21, 21', ...) étant prévue respectivement dans la région de la liaison entre le conducteur creux et le motif de renfoncement (5, 5', ...), laquelle permet le passage des micro-ondes depuis le conducteur creux (20, 20', ...) dans le motif de renfoncement respectif (5, 5', ...) et procure simultanément une séparation de la pression régnant dans le motif de renfoncement (5, 5', ...) par rapport *à* la pression ambiante autour du dispositif.

5. Dispositif selon l'une plusieurs des revendications précédentes, caractérisé en ce qu'il est prévu deux tôles métalliques en forme de demi-coques (2, 2') qui entourent conjointement complètement le corps creux (4), l'une au moins des demi-coques en tôle (2) présentant des ouvertures qui sont prévues de telle sorte qu'elles correspondent aux manchons de remplissage ou aux manchons de sortie (6, 6') du corps creux (4) lorsque cette demi-coque (2) repose sur le corps creux (4), les ouvertures dans la demi-coque (2) pouvant être refermées avec des couvercles ou des bouchons (7, 7') à travers lesquels est passée la conduite d'entrée de gaz (9, 9') et/ou la conduite d'aspiration (8).

6. Dispositif selon l'une ou plusieurs des revendications précédentes, caractérisé en ce que la chambre sous vide (1) est réalisée en deux pièces, et en ce que la première demi-coque (2') est retenue dans une partie de chambre et la seconde demi-coque (2) est retenue dans l'autre partie de chambre, de telle sorte que les deux demi-coques (2, 2') se trouvent l'une sur l'autre en formant une enveloppe fermée lorsque la chambre sous vide (1) est fermée.

7. Dispositif selon l'une ou plusieurs des revendication précédentes, caractérisé en ce que l'intérieur du corps creux (4) peut être raccordé à une première conduite de pompe à vide (8) et la chambre intérieure entourant les demi-coques (2, 2') peut être raccordée à une seconde conduite de pompe à vide (10), et en ce que les deux chambres peuvent être réglées à différentes pressions.

8. Dispositif selon l'une ou plusieurs des revendication précédentes, caractérisé en ce que les renfoncements en forme de gorge (5, 5', ...) usinés dans l'une des demi-coques (2') forment un motif qui correspond à un second motif formé par les renfoncements de l'autre demi-coque (2), lorsque les deux demi-coques (2, 2') sont assemblées pour former une enveloppe fermée.

9. Dispositif selon l'une ou plusieurs des revendication précédentes, caractérisé en ce que la conduite d'entrée de gaz (9, 9') peut être reliée à un récipient à gaz de contrôle (24), et en ce qu'un détecteur d'hélium (18) peut être relié à la conduite d'aspiration (8).
